# EUROPÄISCHE PATENTSCHRIFT

(11) **EP 3 949 010 B1**
(45) Veröffentlichungstag und Bekanntmachung des Hinweises auf die Patenterteilung: **14.01.2026**
(21) Anmeldenummer: 20713615.1
(22) Anmeldetag: 23.03.2020
(51) Int. Cl.: H01Q 1/22, G01F 23/284, H01P 5/107, G01S 7/03, G01S 13/88, H01Q 13/02, G01S 7/02

(54) **RADARMODUL MIT DOPPELFINNE**
RADAR MODULE WITH DUAL FINS
MODULE RADAR AVEC AILERON DOUBLE

(30) Priorität: 02.04.2019 DE 102019204671
(43) Veröffentlichungstag der Anmeldung: 09.02.2022
(73) Patentinhaber: VEGA Grieshaber KG, 77709 Wolfach (DE)
(72) Erfinder: BAUR, Roland, 78126 Königsfeld (DE)
(74) Vertreter: Maiwald GmbH
(86) Internationale Anmeldenummer: PCT/EP2020/057990
(87) Internationale Veröffentlichungsnummer: WO 2020/200882

(56) Entgegenhaltungen:
- WO-A1-2016/202394
- US-A1- 2008 129 408
- US-A1- 2017 324 135
- US-A1- 2018 375 218
- US-A1- 2019 067 780

## Beschreibung

Die vorliegende Anmeldung beansprucht die Priorität der deutschen Patentanmeldung Nr. 10 2019 204 671.1.

### Gebiet der Erfindung

Die Erfindung betrifft die Radarmesstechnik zur Anlagenüberwachung und Prozessautomatisierung. Insbesondere betrifft die Erfindung ein Radarmodul zur Anlagenüberwachung, ein Radarmessgerät mit einem derartigen Radarmodul und die Verwendung eines Radarmoduls zur Füllstandmessung, Grenzstandmessung, Logistikautomation oder Fertigungsautomation.

### Hintergrund

Radarmessgeräte werden zur Prozessautomatisierung, insbesondere zur Überwachung von Anlagen, beispielsweise im Bereich der Füllstandmessung, der Grenzstandmessung oder der Objekterkennung eingesetzt.

Die auszusendenden Radarsignale werden von einem Radarmodul mit einer Radarsignalquelle erzeugt und in einem Hohlleiter oder einer Antenne eingekoppelt, von der aus die Radarsignale dann in Richtung des zu überwachenden Objekts bzw. des Füllguts abgestrahlt werden.

Hierfür übliche Ausführungen einer Hohlleitereinkopplung weisen einen metallischen Stift, eine Finne, eine Patchantenne oder eine ähnliche Struktur auf. Meist wird das Mikrowellensignal mittels einer Bond-Verbindung mit Schaltungsteilen (zum Beispiel Mikrostrip-Strukturen) auf einer Trägerplatte angeschlossen.

Derartige Radarmessgeräte können insbesondere für W-Band oder K-Band Frequenzen ausgeführt sein.

US 2018/0375218 A1 beschreibt einen Hornantennenarray mit Schlitzen in den Hornantennen.

US 2019/0067780 A1 beschreibt ein Wellenleitermodul und ein Substrat, das einen Koppler aufweist.

US 2017/0324135 A1 beschreibt eine Mikrowellenantenne mit einem Microstrip als Strahlungsquelle.

WO 2016/202394 A1 beschreibt eine Hohlleitereinkopplung für einen Zeilenscanner mit Patchantennen.

Aus US2008/129408 A1 ist ein Millimeterwellen-Transceiver bekannt, der einen Übergang von einer Mikrostreifenleitung auf einen Hohlleiter aufweist.

### Zusammenfassung

Es ist eine Aufgabe der Erfindung, ein alternatives Radarmodul anzugeben, das zur Anlagenüberwachung geeignet ist.

Diese Aufgabe wird durch die Gegenstände der unabhängigen Patentansprüche gelöst. Weiterbildungen der Erfindung ergeben sich aus den Unteransprüchen und der folgenden Beschreibung von Ausführungsformen.

Ein erster Aspekt der Erfindung betrifft ein Radarmodul, eingerichtet zur Anlagenüberwachung, welches einen Mikrowellen-Chip aufweist. Der Mikrowellen-Chip weist eine Radarsignalquelle auf, welche dazu eingerichtet ist, ein Radarsignal mit einer Frequenz von mehr als 75 GHz zu erzeugen. Auch weist er einen Einkoppler, der im Folgenden auch als Koppelelement bezeichnet werden kann, auf, welcher mit der Radarsignalquelle verbunden ist.

Bei der Anlagenüberwachung kann es sich beispielsweise um eine Füllstand- oder Grenzstandmessung handeln. Auch kann das Radarmodul eingerichtet sein, einen Gefahrenbereich einer Maschine zu überwachen, Objekte zu detektieren oder gar zu erkennen, beispielsweise im Rahmen einer Gefahrenraumüberwachung, oder Objekte auf Förderbändern zu detektieren und zu zählen bzw. den Massefluss eines Schüttguts auf einem Förderband zu bestimmen.

Unter dem Begriff Automatisierungstechnik kann ein Teilgebiet der Technik verstanden werden, welches Maßnahmen zum Betrieb von Maschinen und Anlagen ohne Mitwirkung des Menschen beinhaltet. Ein Ziel der damit zusammenhängenden Anlagenüberwachung und Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Automatisierungstechnik betrifft die Logistikautomation. Mit Hilfe von Distanz- und Winkelsensoren werden im Bereich der Logistikautomation Abläufe innerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Automatisierungstechnik betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Durch den Einsatz bei hohen Frequenzen reduzieren sich die Abmessungen der Antenne sowie des Einkopplers und der Hohlleiter- bzw. Antenneneinkopplung insgesamt, von welcher der Einkoppler ein Bestandteil ist. Somit können sämtliche Bestandteile der Radarsignaleinkopplung direkt auf dem Mikrowellen-Chip integriert sein.

Die Einkopplung der Radarsignale, die von der Radarsignalquelle des Mikrowellen-Chips erzeugt werden, in den Hohlleiter oder direkt in eine Antenne erfolgt direkt vom Mikrowellen-Chip aus. Die Radarsignalquelle ist insbesondere zur Erzeugung eines Radarsignals einer Frequenz von über 75 GHz, oder von über 150 GHz, alternativ von über 200 GHz und insbesondere von 240 GHz oder darüber eingerichtet.

Der Einkoppler weist zwei Finnen auf, welche einander gegenüberliegend angeordnet sind und Spiegelsymmetrie zueinander aufweisen. Die beiden Finnen wandeln die von der Radarsignalquelle erzeugten Sendesignale in elektromagnetische Wellen um, die sich dann im

Hohlleiter bzw. dem Antennenhorn ausbreiten. Die Verbindung zwischen der Radarsignalquelle und den Finnen erfolgt ebenfalls im Mikrowellen-Chip, so dass störende Übergänge von der Radarsignalquelle (HF-Generator) auf eine Leitung und von der Leitung auf die jeweilige Finne weitgehend vermieden werden, wodurch störende Reflexionen reduziert werden.

Gemäß einer Ausführungsform sind die beiden Finnen eingerichtet, ein symmetrisches Radarsignal abzustrahlen.

Zur Verbesserung der Einkoppeleigenschaften können eine oder mehrere Stufen im Einkoppelbereich vorgesehen sein.

Gemäß einer weiteren Ausführungsform weist das Radarmodul einen Rahmen auf, welcher die zwei Finnen umschließt, so dass der Rahmen die zwei Finnen vor mechanischen Einwirkungen von außen schützt. Der Rahmen dient zum Anschluss an einen Hohlleiter oder direkt an eine Antenne. Im Inneren des Rahmens und um ihn herum kann ein Dielektrikum vorgesehen sein, welches Bestandteil des Mikrowellen-Chips ist. Hierbei handelt es sich beispielsweise um die oberste Schicht des Chips.

Gemäß einer weiteren Ausführungsform sind die zwei Finnen von einem Hohlraum, der auch als Resonanzraum bezeichnet werden kann, umgeben, der zumindest teilweise mit einem Dielektrikum befüllt ist.

Gemäß einer weiteren Ausführungsform ist der Hohlraum mit atmosphärischem Gas befüllt.

Gemäß einer weiteren Ausführungsform ist der Einkoppler ein Einkoppelstift oder eine Patchantenne.

Gemäß einer weiteren Ausführungsform sind der Einkoppler und die Radarsignalquelle über ein gemeinsames Substrat miteinander verbunden. Das Substrat ist eine Schicht des Mikrowellen-Chips. Die Signalverbindung zwischen der Radarsignalquelle und dem Einkoppler kann mit einer möglichst geringen Dämpfung eingerichtet sein, so dass die Empfindlichkeit des Radarmoduls möglichst geringfügig beeinflusst wird. Da zum Anschluss des Einkopplers an die Radarsignalquelle keine Bonddrähte vorgesehen sind, können sich Schwankungen in Länge und Platzierung der Bonddrähte nicht negativ auf die Performance des Radarmoduls auswirken.

Gemäß einer weiteren Ausführungsform weist das Radarmodul einen Hohlleiter und/oder eine Antenne auf. Der Einkoppler ist dazu eingerichtet, das Radarsignal in den Hohlleiter und/oder die Antenne einzukoppeln, wobei der Hohlleiter eingerichtet ist, das eingekoppelte Radarsignal weiterzuleiten. Die Antenne ist eingerichtet, das eingekoppelte Radarsignal abzustrahlen und das Echo wieder zu empfangen.

Gemäß einer weiteren Ausführungsform ist die Antenne eine Hornantenne, gegebenenfalls mit einem Anschlussstück in Form eines Hohlleiters.

Gemäß einer weiteren Ausführungsform ist das Radarmodul zum Erzeugen eines Radarsignals mit einer Sendefrequenz von über 200 GHz ausgeführt.

Gemäß einer weiteren Ausführungsform beträgt der Durchmesser des Resonanzraums weniger als 1,5 mm.

Ein weiterer Aspekt betrifft ein Radarmessgerät mit einem oben und im Folgenden beschriebenen Radarmodul.

Ein weiterer Aspekt betrifft die Verwendung eines oben und im Folgenden beschriebenen Radarmoduls zur Füllstandmessung, Grenzstandmessung, Logistikautomation oder Fertigungsautomation.

Im Folgenden werden mit Verweis auf die Figuren Ausführungsformen beschrieben. Die Darstellungen in den Figuren sind schematisch und nicht maßstäblich. Werden in der folgenden Figurenbeschreibung die gleichen Bezugszeichen verwendet, so bezeichnen diese gleiche oder ähnliche Elemente.

### Kurze Beschreibung der Figuren

Fig. 1 zeigt ein Radarmodul gemäß einer Ausführungsform.
Fig. 2 zeigt das Radarmodul der Fig. 1 in Draufsicht.
Fig. 3 zeigt eine perspektivische Darstellung eines Radarmoduls gemäß einer Ausführungsform.
Fig. 4 zeigt ein Radarmessgerät mit einem oben und im Folgenden beschriebenen Radarmodul.

### Detaillierte Beschreibung von Ausführungsformen

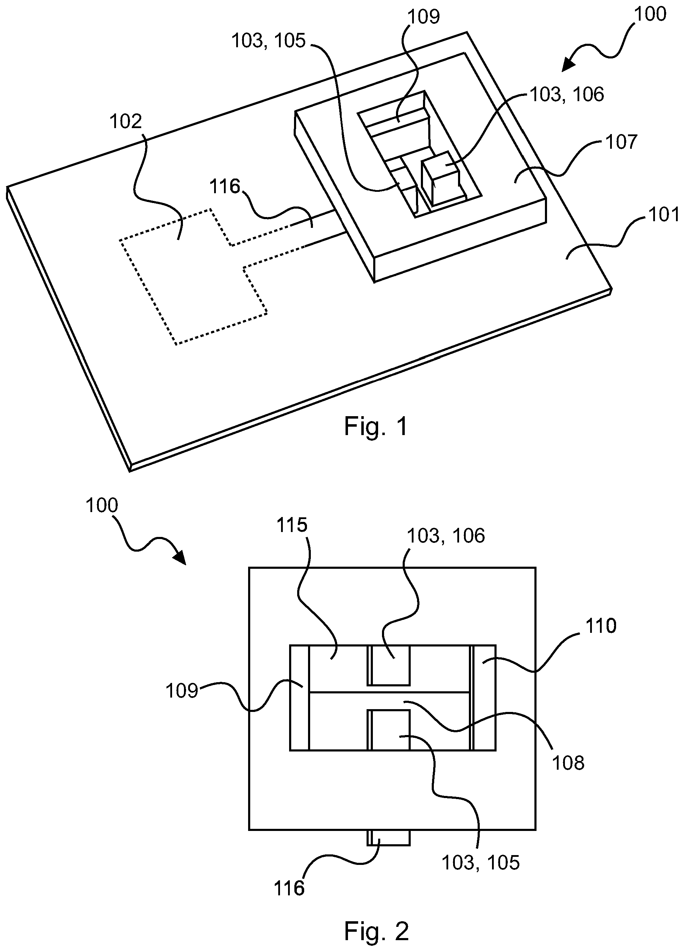

Fig. 1 zeigt einen kleinen Ausschnitt eines Radarmoduls 100 eines Radarmessgeräts gemäß einer Ausführungsform. Das Radarmodul wird im Bereich der Prozessautomatisierung eingesetzt, insbesondere zur Anlagenüberwachung.

Es weist einen Mikrowellen-Chip 101 auf, auf bzw. in dem eine Radarsignalquelle 102 ausgebildet ist. Es ist ein Einkoppler 103 vorgesehen, beispielsweise in Form von zwei Finnen 105, 106, welche gegenüberliegend zueinander angeordnet sind. Die Radarsignalquelle ist mit einer der beiden Finnen 105 über die elektrische Verbindung 116 an die Radarsignalquelle 102 angeschlossen.

Der Chip selber bildet einen Resonanzraum aus, der von einem metallischen Rahmen 107 gebildet wird und in dessen Hohlraum sich der Einkoppler 103 befindet. Der Rahmen dient dem Anschluss der Einkopplung an einen Hohlleiter oder direkt an eine Antenne.

Der Rahmen 107 und der Einkoppler 103/105 bestehen zumindest im Wesentlichen aus Metall und sind beispielsweise zumindest teilweise in eine dielektrische Schicht des Mikrowellen-Chips 101 eingebettet. Die dielektrische Schicht kann in etwa bis zur Höhe der Endflächen des Einkopplers 103 reichen oder darüber hinaus, so dass der Einkoppler 103 vollständig in die dielektrische Schicht eingebettet ist.

Der Querschnitt des Resonanzraums kann rechteckig ausgestaltet sein mit einer Breite, die größer ist als dessen Tiefe, beispielsweise in etwa doppelt so groß.

An den beiden schmäleren Seiten des Resonanzraums können Stufen 109, 110 vorgesehen sein (vgl. insbesondere Fig. 2), durch welche die Einkoppeleigenschaften verbessert werden können.

Fig. 2 zeigt eine Draufsicht des Radarmoduls der Fig. 1. Die zweite Finne 106 befindet sich auf einer Massefläche 115, die mit dem Rahmen 107 leitend verbunden ist.

Zwischen den gegenüberliegend angeordneten Finnen 105, 106 befindet sich ein Hohlraum 108, der zumindest teilweise mit dem Dielektrikum ausgefüllt sein kann.

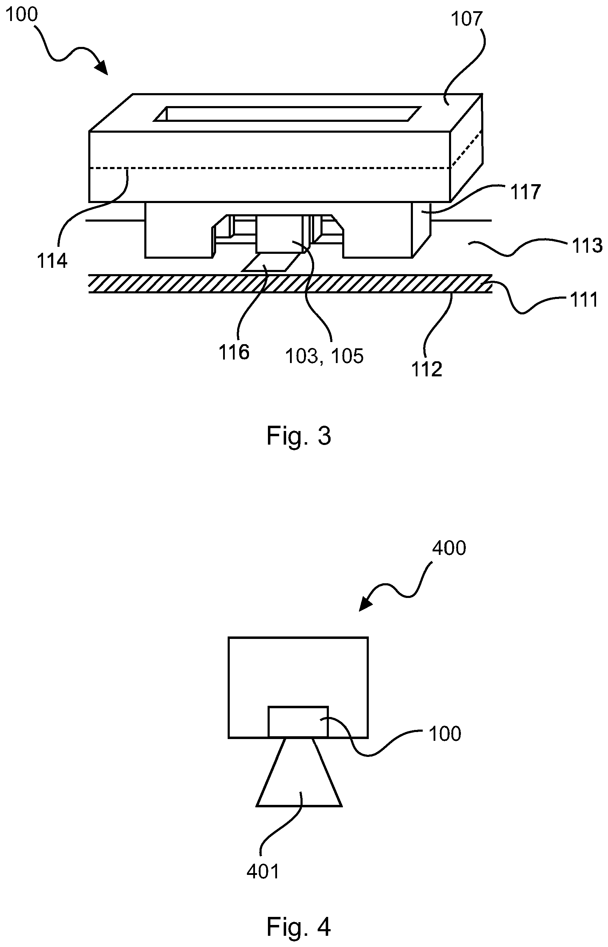

Fig. 3 zeigt eine weitere Ausführungsform des Radarmoduls 100, bei der die Basis des Rahmens 107 schmäler gestaltet ist als der obere Bereich des Rahmens 107. Im unteren Bereich sind an den gegenüberliegenden, längeren Seiten des Rahmens Aussparungen vorgesehen. Durch eine dieser Aussparungen läuft die elektrische Verbindung 116 zur ersten Finne 105.

Fig. 3 zeigt drei Layer oder Lagen des Mikrowellen-Chips 101. Bezugszeichen 111 zeigt eine dielektrische Lage, unter welcher und über welcher sich jeweils eine Metalllage 112, 113 befindet. Über der Metalllage 113 kann eine weitere dielektrische Lage vorgesehen sein, die beispielsweise bis zur gestrichelten Linie 114 ausgebildet ist, so dass der Rahmen 107 daraus hervorsteht.

An diesen Rahmen 107 wird der weiterführende Hohlleiter oder direkt die Antenne angeschlossen.

Aufgrund der hohen Frequenzen des Radarsignals (größer 75 GHz) wird die mechanische Ausführung der Doppelfinne so klein, dass sie ohne Weiteres im Mikrowellen-Chip integriert werden kann.

Die Einspeisung des Radarsignals in den Hohlleiter bzw. die Antenne erfolgt über den Resonanzraum 108 mithilfe der beiden spiegelsymmetrisch gegenüberliegend angeordneten Finnen 105, 106. Dadurch löst sich die elektromagnetische Welle von Anfang an symmetrisch und unverzehrt in den Hohlleiter bzw. das Antennenhorn ab.

Durch Auffüllen des Resonanzraums 108 um die beiden Finnen herum mit einem mikrowellentauglichen Dielektrikum wird die mechanische Ausführung der Anordnung durch den entstehenden (physikalischen, wellentechnischen) Verkürzungsfaktor verringert, wodurch entsprechend Platz auf dem Chip und somit Kosten gespart werden können.

Durch die Integration auf dem Chip entfällt eine chipexterne Verbindungsleitung zwischen dem Chip und der Doppelfinne. Dadurch werden Reflexionen vermieden, wodurch das sogenannte Klingelverhalten des Radarmoduls verbessert werden kann und Kosten gespart werden können.

Durch den Einsatz bei hohen Frequenzen reduzieren sich die Abmessungen der mechanischen Elemente der Hohlleitereinkopplung bzw. Antenneneinkopplung so weit, dass diese direkt in dem Mikrowellen-Chip integriert werden können.

Die Doppelfinne kann durch entsprechende Anordnung von Kupfer und Dielektrikum wie die anderen Elemente des Chips innerhalb des Chip-Produktionsprozesses aufgebaut werden. Hierbei kann der Zwischenraum zwischen den beiden Finnen entweder in Luft belassen werden oder mit Dielektrikum aufgefüllt werden. Welche der beiden Varianten vorgezogen wird, kann davon abhängen, in welcher Art von Antenne, beispielsweise in einen dielektrischen Leiter oder in ein ungefülltes Horn, eingespeist wird.

Fig. 4 zeigt ein Radarmessgerät 400 mit einem oben beschriebenen Radarmodul 100 und einer daran angeschlossenen Hornantenne 401.

## Patentansprüche

1. Radarmodul (100), eingerichtet zur Anlagenüberwachung, aufweisend einen Mikrowellen-Chip (101) mit:
- eine Radarsignalquelle (102), welche dazu eingerichtet ist, ein Radarsignal mit einer Frequenz von mehr als 75 GHz zu erzeugen;
- einen Einkoppler (103), welcher mit der Radarsignalquelle verbunden ist,
wobei der Einkoppler (103) zwei Finnen (105, 106) aus Metall aufweist, welche gegenüberliegend zueinander angeordnet sind und Spiegelsymmetrie zueinander aufweisen,
wobei eine erste Finne (105) der zwei Finnen (105, 106) über eine elektrische Verbindung (116) an die Radarsignalquelle (102) angeschlossen ist und eine zweite Finne (106) der zwei Finnen (105, 106) mit einer Massefläche (115) verbunden ist,
wobei die zwei Finnen (105, 106) von einem Hohlraum (108) umgeben sind,
wobei der Hohlraum (108) mit einem Dielektrikum befüllt ist.

2. Radarmodul (100) gemäß Anspruch 1,
wobei die zwei Finnen (105, 106) eingerichtet sind, ein symmetrisches Radarsignal abzustrahlen.

3. Radarmodul (100) gemäß einem der Ansprüche 1 oder 2,
wobei das Radarmodul einen Rahmen (107) aufweist, welcher die zwei Finnen (105, 106) umschließt, sodass der Rahmen (107) die zwei Finnen (105, 106) vor mechanischen Einwirkungen von außen schützt.

4. Radarmodul (100) gemäß einem der Ansprüche 1 bis 3,
wobei die zwei Finnen (105, 106) von einem Hohlraum (108) umgeben sind;
wobei der Hohlraum mit atmosphärischen Gas befüllt ist.

5. Radarmodul (100) gemäß einem der vorherigen Ansprüche,
wobei der Einkoppler (103) und die Radarsignalquelle (102) mittels eines gemeinsamen Substrats (111) miteinander verbunden sind.

6. Radarmodul (100) gemäß einem der vorherigen Ansprüche,
wobei das Radarmodul einen Hohlleiter und/oder eine Antenne (401) aufweist;
wobei der Einkoppler (103) dazu eingerichtet ist, das Radarsignal in den Hohlleiter oder die Antenne (401) einzukoppeln;
wobei der Hohlleiter dazu eingerichtet ist, das eingekoppelte Radarsignal weiterzuleiten.

7. Radarmodul (100) gemäß Anspruch 6,
wobei die Antenne (401) eine Hornantenne ist.

8. Radarmessgerät (400) mit einem Radarmodul (100) gemäß einem der vorherigen Ansprüche.

9. Verwendung eines Radarmoduls (100) gemäß einem der Ansprüche 1 - 7 zur Füllstandmessung, Grenzstandmessung, Logistikautomation oder Fertigungsautomation.

## Claims

1. A radar module (100) configured for plant monitoring, comprising a microwave chip (101), comprising:
- a radar signal source (102) configured to generate a radar signal with a frequency of more than 75 GHz;
- a coupler (103) connected to the radar signal source,
wherein the coupler (103) comprises two metal fins (105, 106), which are arranged opposite each other and are mirror-symmetrical to each other,
wherein a first fin (105) of the two fins (105, 106) is connected to the radar signal source (102) via an electrical connection (116) and a second fin (106) of the two fins (105, 106) is connected to a ground plane (115),
wherein the two fins (105, 106) are surrounded by a cavity (108),
wherein the cavity (108) is filled with a dielectric material.

2. The radar module (100) according to claim 1,
wherein the two fins (105, 106) are configured to emit a symmetrical radar signal.

3. The radar module (100) according to one of claims 1 or 2,
wherein the radar module has a frame (107), which encloses the two fins (105, 106), so that the frame (107) protects the two fins (105, 106) from external mechanical influences.

4. The radar module (100) according to one of claims 1 to 3,
wherein the two fins (105, 106) are surrounded by a cavity (108);
wherein the cavity is filled with atmospheric gas.

5. The radar module (100) according to one of the preceding claims,
wherein the coupler (103) and the radar signal source (102) are connected to each other by means of a common substrate (111).

6. The radar module (100) according to one of the preceding claims,
wherein the radar module comprises a waveguide and/or an antenna (401);
wherein the coupler (103) is configured to couple the radar signal into the waveguide or into the antenna (401);
wherein the waveguide is configured to transmit the coupled radar signal.

7. The radar module (100) according to claim 6,
wherein the antenna (401) is a horn antenna.

8. A radar measuring device (400) with a radar module (100) according to one of the preceding claims.

9. Use of a radar module (100) according to one of claims 1 - 7 for fill level measurement, limit level measurement, logistics automation or production automation.

## Revendications

1. Module radar (100) configuré pour la surveillance d'installation, comportant une puce hyperfréquence (101) avec :
- une source de signal radar (102) qui est configurée pour générer un signal radar ayant une fréquence supérieure à 75 GHz ;
- un coupleur (103) qui est relié à la source de signal radar,
dans lequel le coupleur (103) comporte deux ailerons (105, 106) en métal, qui sont disposés l'un opposé à l'autre et qui présentent une symétrie spéculaire l'un par rapport à l'autre,
dans lequel un premier aileron (105) des deux ailerons (105, 106) est reliée à la source de signal radar (102) par une connexion électrique (116) et un second aileron (106) des deux ailerons (105, 106) est relié à un plan de masse (115),
dans lequel les deux ailerons (105, 106) sont entourés d'une cavité (108),
dans lequel la cavité (108) est remplie d'un diélectrique.

2. Module radar (100) selon la revendication 1,
dans lequel les deux ailerons (105, 106) sont configurés pour émettre un signal radar symétrique.

3. Module radar (100) selon l'une des revendications 1 ou 2,
dans lequel le module radar comporte un cadre (107) qui entoure les deux ailerons (105, 106), de telle sorte que le cadre (107) protège les deux ailettes (105, 106) des influences mécaniques extérieures.

4. Module radar (100) selon l'une des revendications 1 à 3,
dans lequel les deux ailerons (105, 106) sont entourés d'une cavité (108) ;
dans lequel la cavité est remplie de gaz atmosphérique.

5. Module radar (100) selon l'une des revendications précédentes,
dans lequel le coupleur (103) et la source de signal radar (102) sont reliés l'un à l'autre au moyen d'un substrat partagé (111).

6. Module radar (100) selon l'une des revendications précédentes,
dans lequel le module radar comporte un guide d'ondes et/ou une antenne (401) ;
dans lequel le coupleur (103) est configuré pour coupler le signal radar dans le guide d'ondes ou dans l'antenne (401) ;
dans lequel le guide d'ondes est configuré pour retransmettre le signal radar couplé.

7. Module radar (100) selon la revendication 6,
dans lequel l'antenne (401) est une antenne à cornet.

8. Appareil radar de mesure (400) comportant un module radar (100) selon l'une des revendications précédentes.

9. Utilisation d'un module radar (100) selon l'une des revendications 1 à 7 pour la mesure d'un niveau de remplissage, la mesure d'un niveau de seuil, l'automatisation logistique ou l'automatisation de la fabrication.
